# EUROPÄISCHE PATENTANMELDUNG

(11) **EP 4 744 936 A1**
(43) Veröffentlichungstag der Anmeldung: **20.05.2026**
(21) Anmeldenummer: 24213958.2
(22) Anmeldetag: 19.11.2024
(51) Int. Cl.: B60L 3/04, B60L 58/13, B60L 58/20, B60R 16/03, H02J 1/08, H02J 7/14, H02J 7/34, B60L 3/00

(54) **BORDNETZ FÜR EIN KRAFTFAHRZEUG UND KRAFTFAHRZEUG**

(71) Anmelder: HOLON GmbH, 33102 Paderborn (DE)
(72) Erfinder: WRANGE, Erik, 33100 Paderborn (DE); REINEKE, Hendrik, 33014 Bad Driburg (DE); KURUGODU, Manoj, 59557 Lippstadt (DE); HAMMELMAIER, Ullrich, 33104 Paderborn (DE)
(74) Vertreter: Ksoll, Peter

(57) **Zusammenfassung**

Die Erfindung betrifft Bordnetz (1) für ein Kraftfahrzeug, umfassend ein Hochvoltnetz (2) und ein Niedervoltnetz (3), wobei das Hochvoltnetz (2) eine Hochvoltbatterie (4) als Primärenergiequelle aufweist und das Niedervoltnetz (3) eine Niedervoltbatterie (13) als Primärenergiequelle aufweist. Die Erfindung umfasst weiterhin ein Kraftfahrzeug mit einem entsprechenden Bordnetz (1).

## Beschreibung

Die vorliegende Erfindung betrifft ein Bordnetz für ein Kraftfahrzeug mit den Merkmalen im Oberbegriff des Anspruchs 1. Die Erfindung betrifft weiterhin ein Kraftfahrzeug mit einem erfindungsgemäßen Bordnetz gemäß den Merkmalen des Anspruchs 11.

Das Bordnetz eines Kraftfahrzeugs ist ein elektrisches System, welches alle elektrischen Komponenten und Verbraucher im Fahrzeug mit elektrischer Energie versorgt. Das Bordnetz verteilt die elektrische Energie in einem definierten Spannungsbereich. Bei Elektro- und Hybridfahrzeugen umfasst das Bordnetz in der Regel ein Hochvoltnetz und ein Niedervoltnetz. Das Hochvoltnetz wird typischerweise in einem Spannungsbereich zwischen 60 V und 850 V betrieben, während das Niedervoltnetz meist eine Spannung zwischen 12 V und 48 V aufweist. Das Hochvoltnetz dient primär der Versorgung des Fahrantriebs und einiger antriebsrelevanter Nebenaggregate mit elektrischer Energie, während das Niedervoltnetz sicherheitsrelevante Baugruppen, wie Lenkung und Bremsanlage, aber auch anderweitige elektrische Verbraucher, wie beispielsweise die Klimaanlage, das Infotainment oder die Sitzheizung mit elektrischer Energie versorgt.

Das Hochvoltnetz entsprechender Bordnetze weist eine Hochvoltbatterie als Primärenergiequelle auf. Die Primärenergieversorgung des Niedervoltnetzes erfolgt in der Regel ebenfalls über die Hochvoltbatterie. Dazu ist das Hochvoltnetz über einen Gleichspannungswandler mit dem Niedervoltnetz gekoppelt.

Entsprechende Systeme sind beispielsweise in der WO 2024 068 065 A1 sowie der DE 10 2013 225 097 A1 offenbart. Die hier gezeigten Bordnetze sind insbesondere so ausgestaltet, dass die mit dem Niedervoltnetz verbundenen Verbraucher auch im Ruhemodus des Kraftfahrzeugs über den Gleichspannungswandler mit elektrischer Energie aus der Hochspannungsbatterie versorgt werden können. So kann auf eine Batterie im gesamten Niedervoltnetz verzichtet werden.

Die für das Niedervoltnetz benötigte Energie über die Hochvoltbatterie des Hochvoltnetzes bereitzustellen ist jedoch auch mit Nachteilen verbunden. Bei elektrisch angetriebenen Kraftfahrzeugen und insbesondere bei autonom fahrenden Kraftfahrzeugen können die an das Niedervoltnetz angeschlossenen Verbraucher beim Betrieb des Kraftfahrzeugs bis zum 50 % der Hochvoltbatteriekapazität beanspruchen. Dies wirkt sich nachteilig auf die Reichweite der Kraftfahrzeuge aus, da durch die Hochvoltbatterie der Antriebsstrang mit elektrischer Energie versorgt wird.

Eine naheliegende Möglichkeit die Reichweite entsprechender Kraftfahrzeuge zu erhöhen, ist die Erhöhung der Kapazität der Hochvoltbatterie, beispielsweise durch das Hinzufügen von zusätzlichen Batteriemodulen. Dies bringt jedoch mehrere Nachteile mit sich. Zusätzliche Hochvoltbatteriemodule weisen ein signifikantes Gewicht auf, welches sich kontraproduktiv auf das Gewicht des Kraftfahrzeugs und somit dessen Reichweite auswirkt. Aufgrund der mechanischen und thermischen Anforderungen sind zudem gewichtsträchtige Einhausungen und Kühleinrichtungen erforderlich. Weiterhin müssen Schutzmaßnahmen bezüglich der Hochvoltsicherheit eingehalten werden, um im Falle von Havarien aktiven und passiven Anwenderschutz zu gewährleisten. Nicht zuletzt ist auch die Aufnahme von zusätzlichen Batteriemodulen durch den beengten Bauraum innerhalb des Kraftfahrzeugs beschränkt.

Hiervon ausgehend ist die Aufgabe der vorliegenden Erfindung ein verbessertes Bordnetz für ein Kraftfahrzeug aufzuzeigen, das eine ausreichende Versorgung des Niedervoltnetzes mit elektrischer Energie sicherstellt und gleichzeitig eine Reichweitenerhöhung des Kraftfahrzeugs ermöglicht, ohne die Kapazität der Hochvoltbatterie zu erhöhen.

Weiterhin ist die Aufgabe der Erfindung ein Kraftfahrzeug mit einem entsprechenden Bordnetz aufzuzeigen.

Der erste Teil der Aufgabe wird durch ein Bordnetz für ein Kraftfahrzeug gemäß den Merkmalen des Anspruchs 1 gelöst. Der zweite Teil der Aufgabe wird durch ein Kraftfahrzeug mit einem erfindungsgemäßen Bordnetz gemäß Anspruch 11 gelöst.

Vorteilhafte Ausführungsformen der Erfindung sind Gegenstand der abhängigen Ansprüche.

Das erfindungsgemäße Bordnetz ist als ein Bordnetz für ein Kraftfahrzeug, insbesondere für ein elektromotorisch angetriebenes Kraftfahrzeug ausgebildet. Unter einem elektromotorisch angetriebenen Kraftfahrzeug wird in diesem Zusammenhang bevorzugt ein Fahrzeug verstanden, welches entweder über einen Hybridantrieb (wie etwa die Kombination aus Elektromotor und Verbrennungsmotor, zum Beispiel Mikrohybride, Mildhybride oder Pluginhybride) oder einen rein elektrischen Antrieb verfügt. Insbesondere handelt es sich bei dem Kraftfahrzeug um ein mindestens teilweise automatisiert fahrendes, elektromotorisch angetriebenes Kraftfahrzeug.

Das Bordnetz umfasst ein Hochtvoltnetz und ein Niedervoltnetz. Das Hochvoltnetz definiert einen Teil des Bordnetzes, welcher üblicherweise mit einer Spannung mit einem Wert von 60 V bis 850 V beaufschlagt ist. Das Hochvoltnetz umfasst in der Regel die elektrischen Komponenten, die für den elektrischen Fahrbetrieb erforderlich sind.

Das Niedervoltnetz bezieht sich auf den Teil des Bordnetzes, der üblicherweise mit einer Spannung zwischen 12 V und 48 V betrieben wird. Die beiden Bordnetzbereiche haben somit in der Regel unterschiedliche Spannungsebenen.

Mit dem Niedervoltnetz sind kleinere elektrische Verbraucher, wie beispielsweise die Klimaanlage, das Infotainment oder die Sitzheizung des Kraftfahrzeugs gekoppelt. Auch sicherheitsrelevante Verbraucher, die den zuverlässigen Fahrbetrieb sicherstellen, wie zum Beispiel Komponenten der Lenk- und Bremsfunktion, sind mit dem Niedervoltnetz gekoppelt.

Das Hochvoltnetz weist als Primärenergiequelle eine Hochvoltbatterie auf. Unter Primärenergiequelle wird im Rahmen der Erfindung die Energiequelle bezeichnet, welche den dazugehörigen Teil des Bordnetzes während des regulären Betriebs des Kraftfahrzeugs mit elektrischer Energie versorgt.

Das Bordnetz zeichnet sich erfindungsgemäß nunmehr dadurch aus, dass das Niedervoltnetz eine Niedervoltbatterie als Primärenergiequelle aufweist. Im Gegensatz zu im Stand der Technik bekannten Bordnetzen bezieht das Niedervoltnetz seine während des regulären Betriebs des Kraftfahrzeugs benötigte Primärenergie direkt von der Niedervoltbatterie und nicht über einen Gleichspannungswandler, der mit dem Hochvoltnetz und somit der Hochvoltbatterie verbunden ist. Dies hat den Vorteil, dass die für das Niedervoltnetz benötigte elektrische Energie nicht von der Hochvoltbatterie bezogen wird. Somit kann die in der Hochvoltbatterie gespeicherte Energie ausschließlich für die mit dem Hochvoltnetz verbundenen Verbraucher, insbesondere den Antriebsstrang verwendet werden. Die Reichweite des Kraftfahrzeugs wird somit durch die an das Niedervoltnetz angeschlossenen Verbraucher nicht reduziert. Es kann folglich eine Reichweitensteigerung des Kraftfahrzeugs erreicht werden, indem die Kapazität der Niedervoltbatterie erhöht wird, ohne dass eine Erhöhung der Kapazität der Hochvoltbatterie erforderlich ist.

Im Vergleich zu den im Kraftfahrzeug verbauten Hochvoltbatterien kann durch den Einsatz von Niedervoltbatterien zudem Gewicht eingespart werden. Aufgrund der geringeren Crashanforderungen kann das Gehäuse der Niedervoltbatterien leichter ausgebildet werden als das Gehäuse bei Hochvoltbatterien. Zudem kann bei Niedervoltbatterien die Kühlung entfallen, was ebenfalls zur Gewichtsreduzierung beiträgt. Ein weiter Vorteil ist, dass die Niedervoltbatterien im Gegensatz zu Hochvoltbatterien nicht nach ECE R100 homologiert werden, da die Niedervoltbatterien nur Nebenverbraucher versorgen und eben nicht den Antriebsstrang. Die Niedervoltbatterien können weiterhin unabhängig von den Hochvoltbatterien im Kraftfahrzeug platziert werden, so dass der zur Verfügung stehende Bauraum des Kraftfahrzeugs möglichst effizient ausgenutzt werden kann.

Vorzugsweise weist das Niedervoltnetz ein erstes Teilnetz und ein zweites Teilnetz auf, wobei das erste Teilnetz aus einem Hauptnetz und einem Redundanznetz ausgebildet ist. Mit dem ersten Teilnetz des Niedervoltnetzes sind insbesondere die sicherheitsrelevanten Verbraucher des Kraftfahrzeugs gekoppelt. Unter sicherheitsrelevanten Verbrauchern werden die Verbraucher verstanden, die für die Sicherstellung eines zuverlässigen Fahrbetriebs, insbesondere eines teilautonomen Fahrbetriebs des Kraftfahrzeugs erforderlich sind. Dabei handelt es sich beispielsweise um Verbraucher, welche in die Lenk- und Bremsfunktionen des Kraftfahrzeugs eingebunden sind. Die entsprechenden Verbraucher sind besonders bevorzugt sowohl im Hauptnetz, als auch im Redundanznetz angeordnet oder sind mit beiden Netzen verbunden. Dies hat den Vorteil, dass im Falle eines Ausfalls des Hauptnetzes, die im Redundanznetz angeordneten und mit diesem verbundenen Verbraucher die sicherheitsrelevanten Funktionen identisch übernehmen können. Dies ist insbesondere bei teilautonom fahrenden Kraftfahrzeugen besonders wichtig, da hier ein manueller Eingriff durch einen Fahrer nicht möglich ist.

Das zweite Teilnetz ist vorzugsweise mit den nicht sicherheitsrelevanten Verbrauchern verbunden. Die nicht sicherheitsrelevanten Verbraucher des Kraftfahrzeugs sind insbesondere Komfortfunktionen, wie beispielsweise ein Navigationssystem, eine Klimaanlage oder eine Sitzheizung. Da ein Ausfall dieser Verbraucher den sicheren und zuverlässigen Fahrbetrieb nicht direkt beeinflusst, ist für diese Verbraucher kein zusätzliches Redundanznetz erforderlich.

Vorzugsweise ist die Niedervoltbatterie über ein Trennelement, insbesondere einen Schalter mit einem Gleichspannungswandler verbunden, wobei der Gleichspannungswandler mit dem Hochvoltnetz verbunden ist. Der Gleichspannungswandler wird nachfolgend als erster Gleichspannungswandler bezeichnet. Bei dem ersten Gleichspannungswandler handelt es sich hierbei um einen Gleichspannungswandler, welcher zur Wandlung der Spannung des Hochvoltnetzes in oder auf einen Spannungswert des Niedervoltnetzes ausgebildet ist. Ist die Niedervoltbatterie über den ersten Gleichspannungswandler mit dem Hochvoltnetz verbunden, wird diese über die Hochvoltbatterie aufgeladen.

Bevorzugt umfasst das Bordnetz eine Steuereinheit, wobei die Steuereinheit bei Erfüllung einer Freigabebedingung das Trennelement aktiviert und die Verbindung zwischen dem Niedervoltnetz und dem ersten Gleichspannungswandler freigibt. Die Freigabebedingung ist insbesondere dann gegeben, wenn die Hochvoltbatterie mit einer Ladeinfrastruktur verbunden ist und geladen wird. So kann während des regulären Ladevorgangs der Hochvoltbatterie auch die Niedervoltbatterie geladen werden, ohne dass ein zusätzlicher Ladeanschluss erforderlich ist.

Die Freigabebedingung kann auch dann erfüllt sein, wenn ein Ladezustand der Niedervoltbatterie unter einen definierten Schwellwert fällt. Der Schwellwert kann beispielsweise 10 % der Gesamtkapazität der Niedervoltbatterie betragen. Somit ist es möglich im laufenden Betrieb des Kraftfahrzeugs die Niedervoltbatterie bei Erreichen eines kritischen Ladezustands über die Hochvoltbatterie aufzuladen. Damit ist sichergestellt, dass die mit dem Niedervoltnetz verbundenen Verbraucher jederzeit mit ausreichend elektrischer Energie versorgt sind.

In einer besonders bevorzugten Ausführungsform der Erfindung ist die Niedervoltbatterie mit dem zweiten Teilnetz gekoppelt und dient diesem als Primärenergiequelle. So können alle nicht sicherheitsrelevanten Verbraucher des Kraftfahrzeugs über das zweite Teilnetz von der Niedervoltbatterie mit elektrischer Energie versorgt werden, ohne dass die Hochvoltbatterie belastet wird.

Das erste Teilnetz kann in diesem Fall über einen zweiten Gleichspannungswandler mit dem Hochvoltnetz verbunden sein und/oder eine zweite Niedervoltbatterie aufweisen, die über den zweiten Gleichspannungswandler mit dem Hochvoltnetz verbunden ist. In dieser Ausführungsform werden die sicherheitsrelevanten Verbraucher des Kraftfahrzeugs über den zweiten Gleichspannungswandler mit elektrischer Energie aus der Hochvoltbatterie des Hochvoltnetzes versorgt. Aufgrund der hohen Kapazität der Hochvoltbatterie ist so sichergestellt, dass die sicherheitsrelevanten Verbraucher jederzeit mit ausreichend elektrischer Energie versorgt sind.

Das Hochvoltnetz weist bevorzugt eine Spannung von 400 V, das erste Teilnetz eine Spannung von 12 V und das zweite Teilnetz eine Spannung von 24 V auf.

Die Niedervoltbatterie hat insbesondere eine Kapazität von 15 kWh bis 25 kWh, insbesondere von 20 kWh. Mit einer entsprechenden Kapazität kann eine ausreichende energetische Versorgung der nicht sicherheitsrelevanten Verbraucher sichergestellt werden und zugleich die Reichweite des Kraftfahrzeugs deutlich erhöht werden, sofern die Kapazität der Hochvoltbatterie, die bei entsprechenden im Stand der Technik bekannten Bordnetzen die nicht sicherheitsrelevanten Verbraucher mit elektrischer Energie versorgt, nicht verändert wird.

Bevorzugt entspricht die elektrische Kapazität der als Primärenergiequelle ausgebildeten Niedervoltbatterie 20 bis 40 %, insbesondere 25 bis 35 % der elektrischen Kapazität der Hochvoltbatterie.

Die Erfindung umfasst weiterhin ein Kraftfahrzeug, welches mit einem erfindungsgemäßen Bordnetz ausgestattet ist.

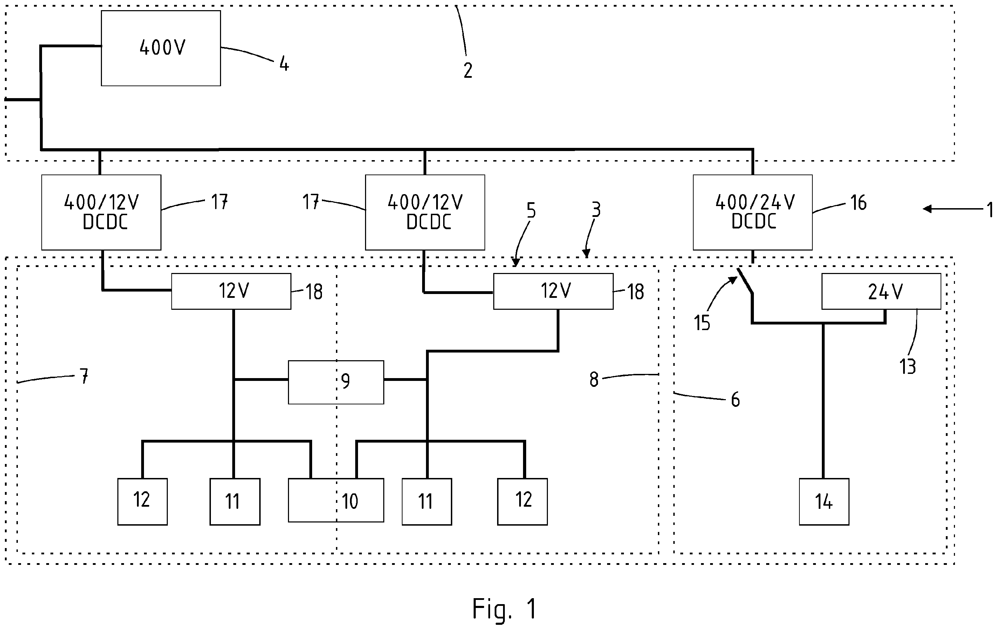

Ein Ausführungsbeispiel der Erfindung wird nachfolgend anhand der Figur näher erläutert. Diese zeigt in einer rein schematischen Darstellung ein skizziertes Schaltbild eines erfindungsgemäßen Bordnetzes.

Das erfindungsgemäße Bordnetz 1 für ein nicht dargestelltes Kraftfahrzeug umfasst ein Hochvoltnetz 2 und ein Niedervoltnetz 3. Das Hochvoltnetz 2 weist eine Hochvoltbatterie 4 als Primärenergiequelle auf. Das Hochvoltnetz 2 wird mit einer Spannung von 400 V betrieben. Über das Hochvoltnetz 2 werden die für den elektrischen Fahrbetrieb erforderlichen Komponenten des Kraftfahrzeugs betrieben, insbesondere der hier nicht dargestellte Antriebsstrang.

Das Niedervoltnetz 3 weist ein erstes Teilnetz 5 und zweites Teilnetz 6 auf, wobei das erste Teilnetz 5 aus einem Hauptnetz 7 und einem Redundanznetz 8 ausgebildet ist. Das erste Teilnetzt 5 wird mit einer Spannung von 12 V und das zweite Teilnetz 6 mit einer Spannung von 24 V betrieben.

Mit dem ersten Teilnetz 5 des Niedervoltnetzes 3 sind ISO 26262:2018 entsprechend insbesondere die sicherheitsrelevanten Verbraucher 9, 10, 11 des Kraftfahrzeugs gekoppelt. Sicherheitsrelevante Verbraucher wie ein automatisiertes Fahrsystem 9 oder Steer-by-Wire 10 sind sowohl an das Hauptnetz 7 als auch an das Redundanznetz 8 angeschlossen, so dass im Falle des Ausfalls eines dieser Netze das jeweils andere Netz die Energieversorgung der Verbraucher 9, 10 übernehmen kann. Andere sicherheitsrelevante Verbraucher, wie ein elektronisches Bremssystem 11, sind sowohl im Hauptnetz 7, als auch im Redundanznetz 8 angeordnet, so dass auch hier im Falle des Ausfalls eines der Netze der sicherheitsrelevanten Verbraucher 11 im jeweils anderen Netz seine Funktion erfüllen kann. Auch nicht sicherheitsrelevante Verbraucher 12 mit einem niedrigen Energiebedarf können mit dem ersten Teilnetz 5 gekoppelt sein.

Erfindungsgemäß weist das Niedervoltnetz 3 eine Niedervoltbatterie 13 als Primärenergiequelle auf. Die Niedervoltbatterie 13 ist an das zweite Teilnetz 6 angeschlossen und versorgt dieses während des normalen Betriebs des Kraftfahrzeugs mit elektrischer Energie. An das zweite Teilnetz 6 sind nicht sicherheitsrelevante Verbraucher 14 des Kraftfahrzeugs angeschlossen, die einen hohen Energiebedarf aufweisen. Dabei kann es sich insbesondere um Komponenten, wie die Klimaanlage oder Komfortfunktionen wie das Infotainment oder die Sitzheizung handeln. Insbesondere bei autonom betriebenen Kraftfahrzeugen verbrauchen diese Komponenten einen erheblichen Anteil der normalerweise von der Hochvoltbatterie 4 zur Verfügung gestellten Energie. Dies wirkt sich wiederum nachteilig auf die Reichweite der Kraftfahrzeuge aus, da über die Hochvoltbatterie 4 auch der Antriebsstrang des Kraftfahrzeugs mit Energie versorgt wird. Durch die erfindungsgemäße Eingliederung der Niedervoltbatterie 13 in das Niedervoltnetz 3 und hier insbesondere in das zweite Teilnetz 6, werden die nicht sicherheitsrelevanten Verbraucher 14 des Kraftfahrzeugs mit einem hohen Energiebedarf während des regulären Betriebs des Fahrzeugs direkt über die Niedervoltbatterie 13 mit der benötigten elektrischen Energie versorgt. Dies hat den Vorteil, dass die in der Hochvoltbatterie 4 gespeicherte Energie ausschließlich für die mit dem Hochvoltnetz 2 verbundenen Verbraucher, insbesondere den Antriebsstrang verwendet werden kann. So kann die Reichweite des Kraftfahrzeugs erhöht werden.

Die Niedervoltbatterie 13 ist über einen Trennelement 15, hier ein Schalter, mit einem ersten Gleichspannungswandler 16, auch als DC/DC-Wandler bezeichnet, verbunden, wobei der erste Gleichspannungswandler 16 mit dem Hochvoltnetz 2 verbunden ist.

Das Bordnetz 1 umfasst eine nicht dargestellte Steuereinheit, wobei die Steuereinheit bei Erfüllung einer Freigabebedingung das Trennelement 15 aktiviert und damit die Verbindung zwischen dem Niedervoltnetz 3 und dem ersten Gleichspannungswandler 16 freigibt, so dass die Niedervoltbatterie 13 über das Hochvoltnetz 2 geladen wird. Die Freigabebedingung ist insbesondere während eines Ladevorgangs der Hochvoltbatterie 4 und/oder bei Erreichen eines Ladezustands der Niedervoltbatterie 13 von kleiner/gleich 10 % erfüllt. Wird die Hochvoltbatterie 4 an ein Ladenetzwerk angeschlossen, wird über den ersten Gleichspannungswandler 16 auch die Niedervoltbatterie 13 aufgeladen. Somit ist kein zusätzlicher Ladeanschluss für die Niedervoltbatterie 13 erforderlich. Auch bei Erreichen eines kritischen Ladezustands der Niedervoltbatterie 13 ist es im laufenden Betrieb des Kraftfahrzeugs möglich, die Niedervoltbatterie 13 über die Hochvoltbatterie 4 aufzuladen. Somit ist sichergestellt, dass die mit dem Niedervoltnetz 3 verbundenen Verbraucher 14 jederzeit mit ausreichender elektrischer Energie versorgt sind.

Das Hauptnetz 7 und das Redundanznetz 8 sind jeweils über einen zweiten Gleichspannungswandler 17 mit dem Hochvoltnetz 2 verbunden. Die mit dem ersten Teilnetz 5 verbundenen Verbraucher 9, 10, 11, 12 werden über die zweiten Gleichspannungswandler 17 direkt über das Hochvoltnetz 2 mit elektrischer Energie versorgt. Aufgrund der hohen Kapazität der Hochvoltbatterie 4 ist so sichergestellt, dass insbesondere die sicherheitsrelevanten Verbraucher 9, 10, 11 jederzeit mit ausreichender elektrischer Energie versorgt werden können.

Sowohl das Hauptnetz 7, als auch das Redundanznetz 8 weisen jeweils eine zweite Niedervoltbatterie 18 auf. Die zweiten Niedervoltbatterien 18 dienen nicht der Primärenergieversorgung, sondern können im Ruhezustand des Kraftfahrzeugs die mit dem ersten Teilnetz 5 verbundenen Verbraucher, welche im Ruhezustand des Kraftfahrzeugs weiterhin aktiv sind, mit elektrischer Energie versorgen. Die zweiten Niedervoltbatterien 18 dienen somit lediglich der Sekundärversorgung und nicht als Primärenergiequelle.

### Bezugszeichen:

- 1 -: Bordnetz
- 2 -: Hochvoltnetz
- 3 -: Niedervoltnetz
- 4 -: Hochvoltbatterie
- 5 -: erstes Teilnetz
- 6 -: zweites Teilnetz
- 7 -: Hauptnetz von 5
- 8 -: Redundanznetz von 5
- 9 -: sicherheitsrelevanter Verbraucher
- 10 -: sicherheitsrelevanter Verbraucher
- 11 -: sicherheitsrelevanter Verbraucher
- 12 -: nicht sicherheitsrelevanter Verbraucher
- 13 -: Niedervoltbatterie
- 14 -: nicht sicherheitsrelevanter Verbraucher
- 15 -: Trennelement
- 16 -: erster Gleichspannungswandler
- 17 -: zweiter Gleichspannungswandler
- 18 -: Niedervoltbatterie

## Patentansprüche

1. Bordnetz (1) für ein Kraftfahrzeug, umfassend ein Hochvoltnetz (2) und ein Niedervoltnetz (3), wobei das Hochvoltnetz (2) eine Hochvoltbatterie (4) als Primärenergiequelle aufweist, **dadurch gekennzeichnet, dass** das Niedervoltnetz (3) eine Niedervoltbatterie (13) als Primärenergiequelle aufweist.

2. Bordnetz (1) nach Anspruch 1, **dadurch gekennzeichnet, dass** das Niedervoltnetz (3) ein erstes Teilnetz (5) und ein zweites Teilnetz (6) aufweist, wobei das erste Teilnetz (5) aus einem Hauptnetz (7) und einem Redundanznetz (8) ausgebildet ist.

3. Bordnetz (1) nach Anspruch 1 oder 2, **dadurch gekennzeichnet, dass** die Niedervoltbatterie (13) über ein Trennelement (15) mit einem ersten Gleichspannungswandler (16) verbunden ist, wobei der erste Gleichspannungswandler (16) mit dem Hochvoltnetz (2) verbunden ist.

4. Bordnetz (1) nach Anspruch 3, **dadurch gekennzeichnet, dass** das Bordnetz (1) eine Steuereinheit umfasst, wobei die Steuereinheit bei Erfüllung einer Freigabebedingung das Trennelement (15) aktiviert und die Verbindung zwischen dem Niedervoltnetz (3) und dem ersten Gleichspannungswandler (16) freigibt, dergestalt, dass die Niedervoltbatterie (13) geladen wird.

5. Bordnetz (1) nach Anspruch 4, **dadurch gekennzeichnet, dass** die Freigabebedingung während eines Ladevorgangs der Hochvoltbatterie (4) und/oder bei Unterschreiten eines definierten Ladezustands der Niedervoltbatterie (13) erfüllt ist, wobei der definierte Ladezustand insbesondere 10 % der Gesamtkapazität der Niedervoltbatterie (13) ist.

6. Bordnetz (1) nach einem der Ansprüche 2 bis 5, **dadurch gekennzeichnet, dass** die Niedervoltbatterie (13) an das zweite Teilnetz (6) angeschlossen ist und diesem als Primärenergiequelle dient.

7. Bordnetz (1) nach einem der Ansprüche 2 bis 6, **dadurch gekennzeichnet, dass** das erste Teilnetz (5) über einen zweiten Gleichspannungswandler (17) mit dem Hochvoltnetz (2) verbunden ist und/oder dass das erste Teilnetzt (5) eine zweite Niedervoltbatterie (18) aufweist, die über den zweiten Gleichspannungswandler (17) mit dem Hochvoltnetz (2) verbunden ist.

8. Bordnetz (1) nach einem der Ansprüche 2 bis 7, **dadurch gekennzeichnet, dass** das Hochvoltnetz (2) eine Spannung von 400 V, das erste Teilnetz (5) eine Spannung von 12 V und das zweite Teilnetz (6) eine Spannung von 24 V aufweist.

9. Bordnetz (1) nach einem der Ansprüche 1 bis 8, **dadurch gekennzeichnet, dass** die Niedervoltbatterie (13) eine Kapazität von 15 bis 25 kWh, insbesondere von 20 bis 22 kWh aufweist.

10. Bordnetz (1) nach einem der Ansprüche 1 bis 9, **dadurch gekennzeichnet, dass** die elektrische Kapazität der Niedervoltbatterie (13) 20 bis 40 %, insbesondere 25 bis 35 % der elektrischen Kapazität der Hochvoltbatterie (4) entspricht.

11. Kraftfahrzeug mit einem Bordnetz (1) nach einem der vorhergehenden Ansprüche.

## Geänderte Patentansprüche

### Geänderte Patentansprüche gemäss Regel 137(2) EPÜ.

1. Bordnetz (1) für ein Kraftfahrzeug, umfassend ein Hochvoltnetz (2) und ein Niedervoltnetz (3), wobei das Hochvoltnetz (2) eine Hochvoltbatterie (4) als Primärenergiequelle aufweist und über das Hochvoltnetz (2) die für den elektrischen Fahrbetrieb erforderlichen Komponenten des Kraftfahrzeugs betreibbar sind, wobei das Niedervoltnetz (3) eine Niedervoltbatterie (13) als Primärenergiequelle aufweist, **dadurch gekennzeichnet, dass** die Niedervoltbatterie (13) über ein Trennelement (15) mit einem ersten Gleichspannungswandler (16) verbunden ist, wobei der erste Gleichspannungswandler (16) mit dem Hochvoltnetz (2) verbunden ist.

2. Bordnetz (1) nach Anspruch 1, **dadurch gekennzeichnet, dass** das Niedervoltnetz (3) ein erstes Teilnetz (5) und ein zweites Teilnetz (6) aufweist, wobei das erste Teilnetz (5) aus einem Hauptnetz (7) und einem Redundanznetz (8) ausgebildet ist.

3. Bordnetz (1) nach Anspruch 1 oder 2, **dadurch gekennzeichnet, dass** das Bordnetz (1) eine Steuereinheit umfasst, wobei die Steuereinheit bei Erfüllung einer Freigabebedingung das Trennelement (15) aktiviert und die Verbindung zwischen dem Niedervoltnetz (3) und dem ersten Gleichspannungswandler (16) freigibt, dergestalt, dass die Niedervoltbatterie (13) geladen wird.

4. Bordnetz (1) nach Anspruch 3, **dadurch gekennzeichnet, dass** die Freigabebedingung während eines Ladevorgangs der Hochvoltbatterie (4) und/oder bei Unterschreiten eines definierten Ladezustands der Niedervoltbatterie (13) erfüllt ist, wobei der definierte Ladezustand insbesondere 10 % der Gesamtkapazität der Niedervoltbatterie (13) ist.

5. Bordnetz (1) nach einem der Ansprüche 2 bis 4, **dadurch gekennzeichnet, dass** die Niedervoltbatterie (13) an das zweite Teilnetz (6) angeschlossen ist und diesem als Primärenergiequelle dient.

6. Bordnetz (1) nach einem der Ansprüche 2 bis 5, **dadurch gekennzeichnet, dass** das erste Teilnetz (5) über einen zweiten Gleichspannungswandler (17) mit dem Hochvoltnetz (2) verbunden ist und/oder dass das erste Teilnetzt (5) eine zweite Niedervoltbatterie (18) aufweist, die über den zweiten Gleichspannungswandler (17) mit dem Hochvoltnetz (2) verbunden ist.

7. Bordnetz (1) nach einem der Ansprüche 2 bis 6, **dadurch gekennzeichnet, dass** das Hochvoltnetz (2) eine Spannung von 400 V, das erste Teilnetz (5) eine Spannung von 12 V und das zweite Teilnetz (6) eine Spannung von 24 V aufweist.

8. Bordnetz (1) nach einem der Ansprüche 1 bis 7, **dadurch gekennzeichnet, dass** die Niedervoltbatterie (13) eine Kapazität von 15 bis 25 kWh, insbesondere von 20 bis 22 kWh aufweist.

9. Bordnetz (1) nach einem der Ansprüche 1 bis 8, **dadurch gekennzeichnet, dass** die elektrische Kapazität der Niedervoltbatterie (13) 20 bis 40 %, insbesondere 25 bis 35 % der elektrischen Kapazität der Hochvoltbatterie (4) entspricht.

10. Kraftfahrzeug mit einem Bordnetz (1) nach einem der vorhergehenden Ansprüche.
